# EUROPEAN PATENT APPLICATION

(11) **EP 0 818 935 A2**
(43) Date of publication of application: **14.01.1998**
(21) Application number: 97110870.9
(22) Date of filing: 01.07.1997
(51) Int. Cl.: H04Q 7/00

(54) **Centralized subscriber line database and processor**

(30) Priority: 10.07.1996 US 678615
(71) Applicant: AT&T Corp., New York, NY 10013-2412 (US)
(72) Inventor: Gabuzda, Lawrence R. Jr., Westfield, New Jersey 07090 (US)
(74) Representative: KUHNEN, WACKER & PARTNER

(57) **Abstract**

The invention provides for a telephone network system that includes a telephone network and centralized subscriber line database processors coupled to the telephone network. Subscriber information is stored in each of the centralized subscriber line database processors. Each of the centralized subscriber line database processors includes a network interface, a subscriber database and a subscriber processor. The subscriber processor responds to a request from a local switch for the subscriber information by retrieving the subscriber information from the subscriber database and sending the request to subscriber information to the local switch through the network interface.

## Description

### BACKGROUND OF THE INVENTION

### 1. Field of the Invention

This invention relates to centralizing subscriber data in a telephone network.

### 2. Description of Related Art

Conventional telephone systems store subscriber information in databases controlled by local switches located geographically close to the subscribers serviced by each local switch. The subscriber information is located in the local switch because locating the subscriber information elsewhere would cause unacceptable delays in handling subscriber telephone calls.

However, storing the subscriber information in the local switch increases the cost of local switch equipment. Because the local switch equipment includes expensive specialized hardware, increasing the capacity of local switches to account for subscriber information further increases the cost of the expensive local switches.

### SUMMARY OF THE INVENTION

The invention provides for a telephone network system that includes centralized subscriber line database processors coupled to the telephone network. Subscriber information is stored in each of the centralized subscriber line database processors.

Each of these centralized subscriber line database processors includes a network interface, a subscriber database and a subscriber processor coupled to the network interface and the subscriber database. The subscriber processor responds to a request from at least one local switch for the subscriber information by retrieving the subscriber information from the subscriber database and sending the requested subscriber information to the at least one local switch through the network interface.

### BRIEF DESCRIPTION OF THE DRAWINGS

The invention is described in detail with reference to the following drawings, wherein like numerals represent like elements:
Fig. 1 is a diagram showing a telephone system including a subscriber line database processor;
Fig. 2 is a block diagram of the subscriber line database processor; and
Fig. 3 is a flowchart of a telephone system process using the subscriber line database processor.

### DETAILED DESCRIPTION OF PREFERRED EMBODIMENTS

Subscriber information is conventionally stored in the local switches because the delay time caused by storing the subscriber information elsewhere in the network would cause large unacceptable time delay in delivering services to the subscriber. This delay time has been significantly reduced by advances in technology so that even if the local switch must request and receive the subscriber information from elsewhere in the network, the telephone system continues to complete users' calls in a timely manner.

A non-exhaustive list of possible subscriber information is shown in a TABLE below. The subscriber information is coded by acronyms such as TN for Telephone Number and OE for Line Equipment Number. LCC, for example, stands for Line Class Code and indicates whether a subscriber line is a residential line or a business line. Information such as LCC may be easily stored in centralized locations without affecting subscriber call processing delay time.

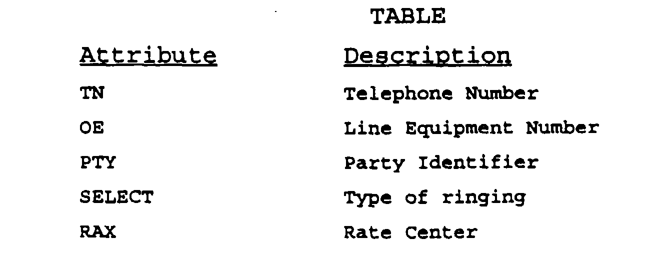

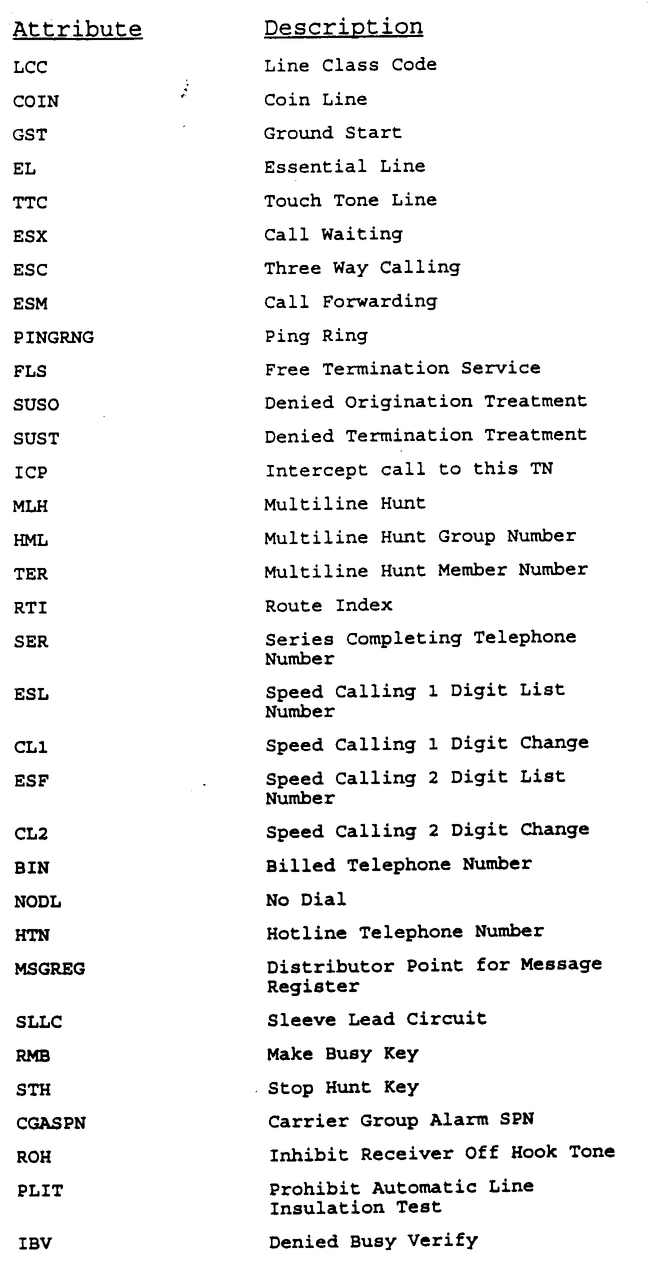

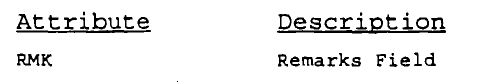

Thus, because of the above-mentioned technological improvements and because at least a portion of the subscriber information does not affect subscriber call processing, a new telephone network system architecture is possible to improve overall telephone network system performance without degrading user call processing performance.

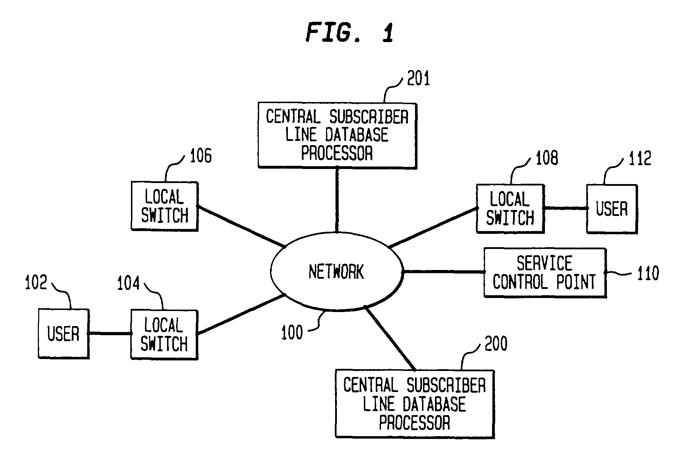

Figure 1 shows a telephone network system architecture that includes centralized subscriber line database processors 200 and 201. The centralized subscriber line database processors 200 and 201 are connected to the telephone network 100 and may include standard off-the-shelf equipment that is very inexpensive when compared to the local switch equipment. The telephone network system 100 may connect users 102 and 112 through local switches 104 and 108, respectively. A portion of the subscriber information that was conventionally stored exclusively in the local switches 104, 106 and 108 may be stored in the centralized subscriber line database processors 200 and 201. Thus, when user 102 calls user 112, for example, the local switches 104 and 108 may be required to request the subscriber information data from the subscriber line database processor 200 before the call can be processed.

The apparent inefficiency in the additional processing required by each of the local switches 104, 106 and 108 is offset by larger system benefits. For example, centralizing a bulk of the subscriber information in the centralized subscriber line database processors 200 and 201 reduces the complexity and size of the local switches 104, 106 and 108. Because the local switches 104, 106 and 108 no longer have management tasks for a large subscriber information database, the local switches 104, 106 and 108 may be simplified to perform only basic switching actions. Thus, the cost of the already expensive local switches, 104, 106 and 108 is reduced. This advantage is gained without increasing call processing delay time perceived by users 102 and 112.

In addition, if the subscriber information is exclusively stored in each of the respective local switches 104, 106 and 108, then a large amount of system resources must be expended whenever the subscriber information is required by other processors. For example, a service control point 110 in an intelligent network configuration controls the execution of specialized services such as virtual private networks, free phone (800 numbers), card calling and voice dialing services. The service control point 110 must determine which of the local switches 104, 106 and 108 contains the needed subscriber information and then expend local switch resources to extract the subscriber information. Moreover, this process of locating and extracting the subscriber information incur additional time delay.

However, if the subscriber information is stored centrally in the centralized subscriber line database processors 200 and 201, the service control point 110 needs only to request the needed subscriber information from the respective centralized subscriber line database processors 200 and 201 without expending any resources of the local switches 104, 106 and 108. Further, the response time of the service control point 110 would be improved because the time delay for searching and locating the subscriber information would be significantly reduced since the subscriber information is stored in the centralized subscriber line database processors 200 and 201.

Further, when most of the subscriber information are stored in the centralized subscriber line database processor 200 and 201, complex software required to maintain and manage the subscriber information would be required only at the centralized subscriber line database processors 200 and 201. The software that manages the subscriber information at the local switches 104, 106 and 108 can be limited to simple and inexpensive software. The centralized subscriber line database processor 200 and 201 adds, deletes and otherwise modifies the subscriber information.

The centralized subscriber line database processor 200 and 201 may have sophisticated software to provide valuable information such as trend data and other statistical information that can be used for optimizing the telephone network so that better and less expensive services may be offered to subscribers. This software may be expensive and the expense is greatly reduced by reducing the number of copies of software required. Thus, the cost of software is drastically reduced by the centralized subscriber line database processors 200 and 201.

Because a bulk of the subscriber information is located in each centralized processor complex, greater flexibility is obtained in processing the subscriber information. In addition, more tailored services can be provided to the subscribers based on the ability to access needed subscriber information from the centralized subscriber line database processors 200 and 201. For example, the capability to easily access the subscriber information allows the centralized subscriber line database processors 200 and 201 to determine whether a line is a business or a residential line. This capability permits the offering of services tailored to the business or residential subscribers for both local and long-distance calls.

The centralized subscriber line database processors 200 and 201 may be distributed throughout the United States or Europe for example. Each of the centralized subscriber line database processors 200 and 201 may be assigned to maintain subscriber information of a large geographic region. Thus, the number of centralized subscriber line database processors 200 and 201 would be much smaller than the number of local switches 104, 106 and 108. For example, the number of centralized subscriber line database processors 200 and 201 could be less than about 10% of the number of local switches 104, 106 and 108. The number of centralized subscriber line database processors 200 and 201 would depend on specific technical requirements of a particular geographical region.

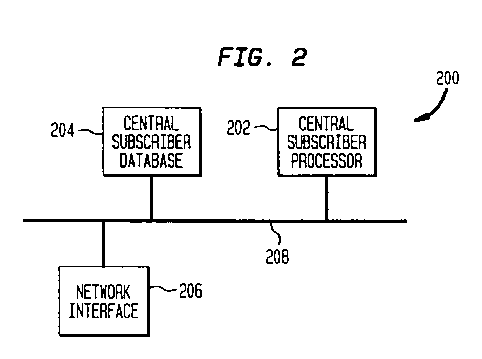

Figure 2 shows a block diagram of a subscriber line database processor 200. The subscriber line database processor 200 includes a subscriber processor 202, a subscriber database 204, and a network interface 206. All of the above components of the subscriber line database processor 200 are interconnected by signal line 208.

The subscriber processor 202 receives requests for the subscriber information from the local switches 104, 106 and 108 through the network interface 206. When a request for the subscriber information is received, the subscriber processor 202 fetches the requested information from the subscriber database 204 and transmits the information to the requesting local switches 104, 106 and 108.

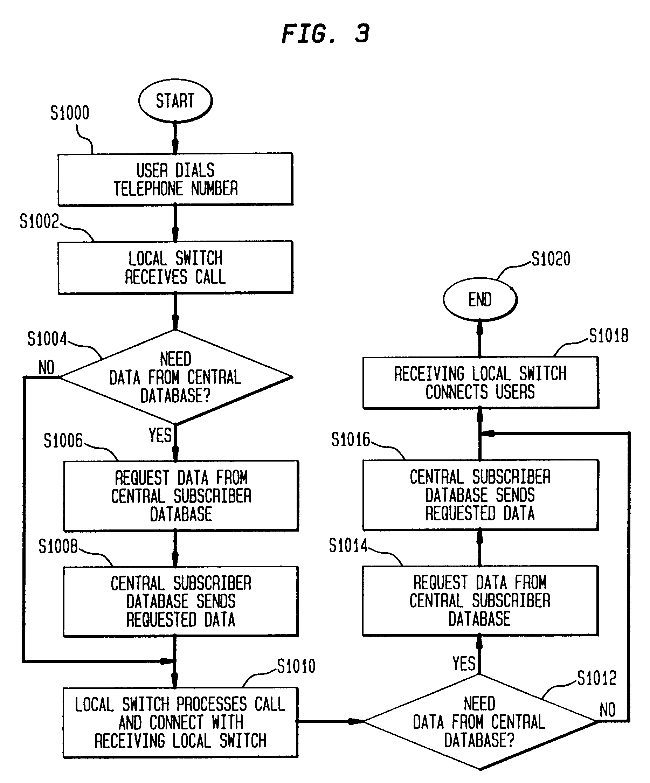

Figure 3 shows a flowchart of a telephone network system processing a call from a user, such as user 102. The process begins in step S1000 by the user 102 dialing a telephone number of the user 112. After the telephone network receives the user 102's call, the process goes to step S1002. In step S1002, the local switch 104 that services the user 102 receives the call. Then, the process goes to step S1004. In step S1004, the local switch 104 determines whether data from the subscriber database 204 is required for the user 102. If data from the subscriber database 204 is required, the process goes to step S1006; otherwise the process goes to step S1010.

In step S1006, the local switch 104 requests user 102's subscriber information from the subscriber line database processor 200 and the process goes to step S1008. In step S1008, the subscriber line database processor 200 receives the request from the local switch 104 and fetches the requested subscriber information from the subscriber database 204 and then ends the requested subscriber information to the local switch 104 through the network interface 206. Then the process goes to step S1010.

In step S1010, the local switch 104 processes the call from the user 102 and connects the user 102 with the receiving local switch 108. Then, the process goes to step S1012. In step S1012, the local switch 108 determines whether subscriber information is required for the user 112. If subscriber information is required, then the process goes to step S1014; otherwise the process goes to step S1018.

In step S1014, the local switch 108 requests user 112's needed subscriber information from the subscriber line database processor 200, and the process goes to step S1016. In step S1016, the subscriber processor 202 receives the request from the local switch 108, fetches the requested subscriber information from the subscriber database 204, and sends the subscriber information to the local switch 108 through the network interface 206. Then, the process goes to step S1018.

In step S1018, the local switch 108 connects the user 102 with the user 112. And the process ends by going to step S1020.

While this invention has been described in conjunction with specific embodiments thereof, it is evident that many alternatives, modifications and variations will be apparent to those skilled in the art. Accordingly, preferred embodiments of the invention as set forth herein are intended to be illustrative, not limiting. Various changes may be made without departing from the spirit and scope of the invention as defined in the following claims.

## Claims

1. A telephone network system, comprising:
a telephone network; and
centralized subscriber line database processors coupled to the telephone network, wherein subscriber information is stored in the centralized subscriber line database processors.

2. The telephone network system of claim 1, wherein each of the centralized subscriber line database processors comprises:
a network interface;
a subscriber database; and
a subscriber processor coupled to the network interface and the subscriber database, wherein the subscriber processor receives requests from at least one local switch for the subscriber information and responds by retrieving the subscriber information from the subscriber database and sending the requested subscriber information to the at least one local switch through the network interface.

3. The telephone network system of claim 2, wherein the subscriber processor manages the subscriber information.

4. The telephone network system of claim 3, wherein the subscriber processor adds, deletes and modifies the subscriber information in the subscriber database based on inputs from subscribers.

5. The telephone network system of claim 2, wherein the subscriber processor processes the subscriber information to provide tailored services for subscribers based on the subscriber information in the subscriber database.

6. The telephone network system of claim 2, wherein the subscriber line database processors consist of standard-off-the-shelf equipment.

7. A method for centralizing subscriber information in a telephone network, comprising:
storing the subscriber information in a subscriber database of each of centralized subscriber line database processors;
receiving requests for the subscriber information from at least one local switch through a network interface;
retrieving the subscriber information from the subscriber database with a subscriber processor in response to the requests; and
sending the retrieved subscriber information through the network interface to the at least one local switch.

8. The method of claim 7, further comprising:
managing the subscriber information using the subscriber processor.

9. The method of claim 8, wherein the step of managing comprises at least one of adding, deleting and modifying the subscriber information in the subscriber database based on inputs from subscribers.

10. The method of claim 7, further comprising:
providing tailored services for subscribers based on the subscriber information in the subscriber database.
